## Europäisches Patentamt
## European Patent Office
## Office européen des brevets

(19)

(11) Veröffentlichungsnummer: **0 063 211**
**B1**

(12) # EUROPÄISCHE PATENTSCHRIFT

(45) Veröffentlichungstag der Patentschrift:
**16.01.85**

(51) Int. Cl.⁴: **B 62 J 7/04**

(21) Anmeldenummer: **82100943.8**

(22) Anmeldetag: **10.02.82**

(54) **Gepäckträger für Zweiradfahrzeuge.**

(30) Priorität: **20.03.81  DE 3110870**

(43) Veröffentlichungstag der Anmeldung:
**27.10.82 Patentblatt 82/43**

(45) Bekanntmachung des Hinweises auf die Patenterteilung:
**16.01.85 Patentblatt 85/3**

(84) Benannte Vertragsstaaten:
**AT BE CH FR IT LI LU NL SE**

(56) Entgegenhaltungen:
**FR - A - 1 534 010**
**US - A - 4 113 158**

(73) Patentinhaber: **ESGE-Marby GmbH + Co. KG., Braker Strasse 1, D-4800 Bielefeld 16 (DE)**

(72) Erfinder: **Niemann, Heinz, Engerstrasse 136, D-4900 Herford (DE)**

(74) Vertreter: **Rüger, Rudolf, Dr.-Ing., Webergasse 3 Postfach 348, D-7300 Esslingen/Neckar (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Gepäckträger für Zweiradfahrzeuge, mit einem an dem Zweiradfahrzeug zu befestigenden, die Gepäckauflagefläche enthaltenden, aus Längs- und Querstreben bestehenden Rahmen, an dem wenigstens ein zur Abstützung dienendes Schenkelpaar mittels Kunststofflagerteilen angelenkt ist, die auf einander gegenüberliegenden Rahmenseiten die Längsstreben umgreifend an diese angespritzt sind un jeweils eine quer zu den Längsstreben verlaufende Lagerbohrung aufweisen, in der die Schenkel mit einem zylindrischen Querstück gelagert sind.

Bei einem bekannten Gepäckträger dieser Art (DE-GM Nr. 7617628) sind die Längs- und Querstreben des aus Aluminium hergestellten Gepäckträgers mittels angespritzter Kunststofformteile miteinander verbunden. Dabei sind gleichzeitig die Schenkel, die zur Abstützung des Rahmens an oder in der Nähe der zugeordneten Radnabe dienen, mit dem sie jeweils verbindenden zylindrischen Querstück in ebenfalls angespritzten Kunststofflagerteilen schwenkbar gelagert, welche das Querstück der Schenkel umgreifen. Damit ergibt sich ein sehr leichter und formschöner, aber dennoch stabiler Gepäckträger, bei dem alle Kunststoffteile einschliesslich der Lagerteile der Schenkel in einem Arbeitsgang an die Längs- und Querstreben angespritzt werden. Wegen der von dem Rahmen abstehenden Schenkel ist aber einerseits das zur Herstellung erforderliche Kunststoffspritzwerkzeug verhältnismässig kompliziert, während anderseits das Einlegen der Längs- und Querstreben sowie der Schenkel in das Spritzwerkzeug sehr sorgfältig geschehen muss, weil sonst eine Beschädigung oder Zerstörung des Spritzwerkzeuges nicht zu vermeiden ist.

Aufgabe der Erfindung ist es deshalb, einen Gepäckträger zu schaffen, der sich durch eine besonders einfach herstellbare stabile Lagerung der Schenkel an dem Rahmen auszeichnet, die bei leichterer Handhabung einen geringeren Aufwand für das Kunststoffspritzwerkzeug erforderlich macht und eine einwandfreie formschöne Verbindung zwischen dem Rahmen und den Schenkeln gewährleistet.

Zur Lösung dieser Aufgabe ist der eingangs genannte Gepäckträger erfindungsgemäss dadurch gekennzeichnet, dass jedes Lagerteil jeweils einen zu der Lagerbohrung durchgehenden Einführschlitz für das Querstück aufweist und die Lagerbohrung sich durch einen an dem Lagerteil angeformten, seitlich vorstehenden Befestigungsansatz erstreckt, auf den ein das Querstück mit umschliessender und die Wandung der Lagerbohrung an dem Querstück in Anlage haltender Spannring unverlierbar aufgesetzt ist.

Die Lagerteile werden bei diesem Gepäckträger zunächst ohne die Schenkel an den Längsstreben angespritzt, womit sich eine wesentliche Vereinfachung und eine geringere Gefährdung der Spritzform ergeben. Die nachträgliche Montage der Schenkel an den Lagerteilen erfolgt mit wenigen Handgriffen, wobei der Spannring eine sehr stabile und dabei ästhetisch ansprechende unverlierbare Halterung der Schenkel in den Lagerteilen gewährleistet.

Sehr einfache Verhältnisse ergeben sich, wenn der Befestigungsansatz eine zylindrische Aussenfläche aufweist, so dass ein zylindrischer Spannring Verwendung finden kann. Dabei ist es vorteilhaft, wenn der Befestigungsansatz von der zugeordneten Längsstrebe aus jeweils zur Rahmeninnenseite weisend angeordnet ist, so dass der Spannring auf der Innenseite der zugeordneten Längsstrebe zu liegen kommt. Gleichzeitig können dabei die Schenkel mit den Längsstreben im wesentlichen in einer Ebene liegend an ihren Lagerteilen angelenkt sein, was den Vorteil mit sich bringt, dass die Schenkel innerhalb oder unmittelbar unterhalb der Längsstreben des Rahmens verlaufen, was aus spritztechnischen Gründen bei der im vorstehenden erläuterten bekannten Ausführungsform eines Gepäckträgers mit einstückig unmittelbar auch an die Schenkel angespritzten Lagerteilen kompliziert ist.

Um in einfacher Weise zu erreichen, dass der Spannring ohne Zuhilfenahme eines Werkzeuges nicht mehr von dem Befestigungsansatz abgezogen werden kann, kann die Anordnung derart getroffen sein, dass der Spannring auf seiner der freien Stirnfläche des Befestigungsansatzes zugewandten Seite mit einer scharfen Innenkante ausgebildet ist. Andererseits kann er auf seiner der scharfen Innenkante gegenüberliegenden Seite innen mit einer randseitigen Anfasung versehen sein, die das Aufschieben auf den Befestigungsansatz erleichtert. Alternativ kann der Befestigungsansatz aber auf seiner Aussenfläche auch eine mit dem Spannring zusammenwirkende Rasteinrichtung in Gestalt eines kleinen Bundes oder einer kleinen Einkerbung tragen, die ebenfalls dem Zweck der unverlierbaren Halterung des Spannringes dient.

Der Gepäckträger kann entweder als Hinterrad- oder als Vorderradgepäckträger ausgebildet sein. Er kann mit einem Schenkelpaar oder mit zwei Schenkelpaaren versehen sein, wobei das die Schenkel eines Paares miteinander verbindende Querstück auch gleichzeitig eine Querstrebe des Rahmens bilden kann.

In der Zeichnung ist ein Ausführungsbeispiel des Gegenstandes der Erfindung dargestellt. Es zeigen:

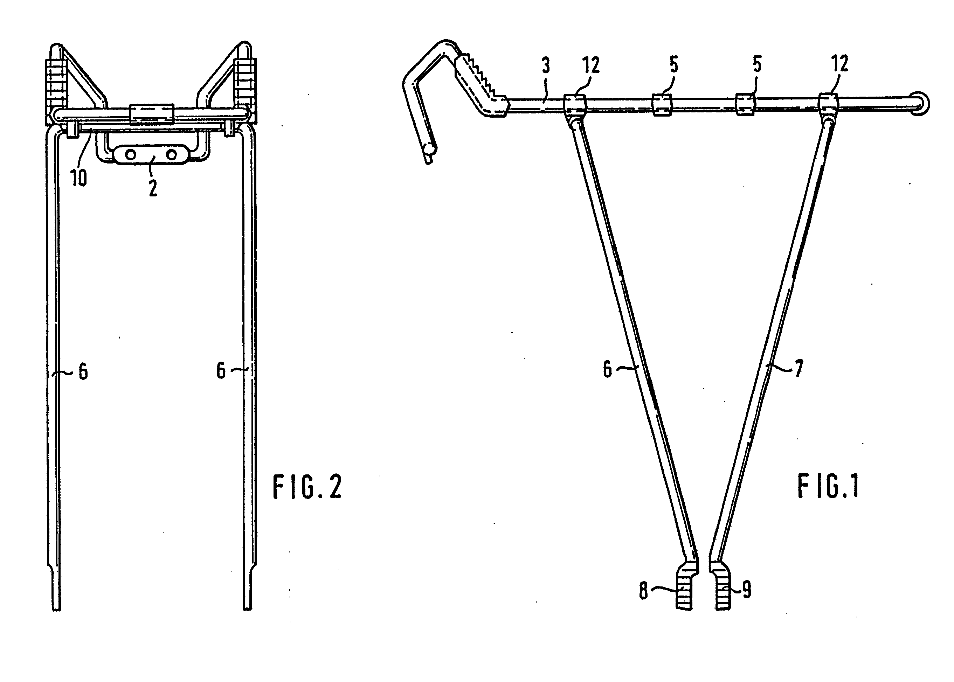

Fig. 1 einen Gepäckträger gemäss der Erfindung, in einer Seitenansicht,

Fig. 2 den Gepäckträger nach Fig. 1, in einer Vorderansicht,

Fig. 3 den Gepäckträger nach Fig. 1, in einer Draufsicht,

Fig. 4 ein Lagerteil des Gepäckträgers nach Fig. 1, mit dem zugeordneten Schenkel, im auseinandergenommenen Zustand, in einer Seitenansicht und im Ausschnitt, sowie in einem anderen Massstab,

Fig. 5 die Anordnung nach Fig. 4, im fertig montierten Zustand, in einer entsprechenden Darstellung, und

Fig. 6 die Anordnung nach Fig. 5, in einer Ansicht entsprechend der Linie VI-VI der Fig. 5, im Ausschnitt.

Der Gepäckträger besteht aus einem die Gepäckauflagefläche enthaltenden Rahmen 1, der mit einer Querlasche 2 ausgebildet ist, mit welcher er an der Hintergabel eines Zweiradfahrzeuges befestigt werden kann. Der Rahmen 1 ist aus zwei auf der einen Seite durch die Querlasche 2 und auf der anderen Seite durch ein angespritztes Kunststoffverbindungsteil 4 miteinander verbundenen parallelen Längsstreben 3 und einer Anzahl von Querstreben 4 zusammengesetzt, die endseitig mittels angespritzter Kunststofformteile 5 mit den Längsstreben 3 verbunden sind. An dem vorderen und dem hinteren Teil des Rahmens 1 ist jeweils ein Schenkelpaar 6 bzw. 7 gelenkig befestigt. Die beiden Schenkelpaare 6, 7 sind dazu eingerichtet, an ihren freien Enden 8 bzw. 9 an dem als Ausfallende bezeichneten Ansatzstück des Zweiradfahrzeugrahmens mittels einer Schelle und einer Schraube in an sich bekannter Weise in der Nähe der Radnabe befestigt zu werden.

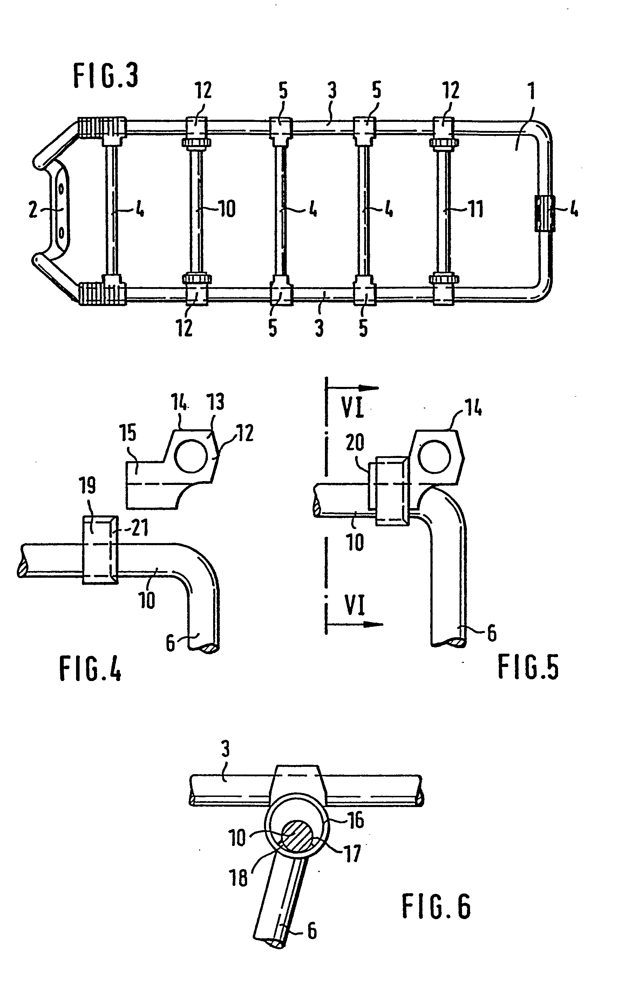

Die beiden Schenkel des Schenkelpaares 6 bzw. 7 sind jeweils durch ein einstückig angeformtes zylindrisches horizontales Querstück 10 bzw. 11 miteinander verbunden, das in der aus Fig. 3 ersichtlichen Weise gleichzeitig eine Querstrebe des Rahmens 1 bildet. Grundsätzlich sind aber auch Ausführungsformen denkbar, bei denen bei der sich so zusammen mit dem Querstück 10 ergebenden U-förmigen Gestalt eines Schenkelpaares die beiden Schenkel eines Schenkelpaares voneinander getrennt und jeweils im wesentlichen L-förmig ausgebildet sind, oder aber die Querstücke dieser L-förmigen Schenkel eines Schenkelpaares durch ein angeformtes Kunststoffverbindungsteil miteinander verbunden sind.

Das Schenkelpaar 6 bzw. 7 ist mit seinem Zylindrischen Querstück 10 bzw. 11 jeweils in zwei Kunststofflagerteilen schwenkbar gelagert, deren Aufbau im einzelnen insbesondere aus den Fig. 4 und 6 zu ersehen ist, und die zusammen mit den Kunststoffteilen 4, 5 in einem Arbeitsgang einstückig an die Längsstreben 3, diese umgreifend, angespritzt sind.

Jedes Lagerteil 12 weist ein die zugeordnete Längsstrebe 3 umgreifendes Teil 13 auf, das oben bei 14 einen Teil der Gepäckauflagefläche bildet und an das seitlich ein Befestigungsansatz 15 vorragend angeformt ist, der eine zylindrische Aussenumfangsfläche 16 trägt. Durch den Befestigungsansatz 15 erstreckt sich eine unterhalb der Längsstrebe 3 und quer zu dieser verlaufende Lagerbohrung 17, in die von der Unterseite her ein Einführschlitz 18 führt. Auf die zylindrische Aussenfläche 16 des Befestigungsansatzes 15 wird ein zylindrischer Spannring 19 aufgeschoben, der aus Kunststoffmaterial, vorzugsweise aber aus Metall und hier insbesondere Aluminium, besteht.

Bei der Montage der Schenkelpaare 6, 7 an dem mit seinen Kunststoffteilen 4, 5, 12 versehenen Gepäckträger wird derart vorgegangen, dass das zylindrische Querstück 10 bzw. 11 des jeweiligen Schenkelpaares 6 bzw. 7 durch den Einführschlitz 18 unter gleichzeitiger entsprechender elastischer Aufweitung der den Einführschlitz 18 begrenzenden Kunststoffteile in die Lagerbohrung 17 eingedrückt wird. Hierauf wird der Spannring 19 von dem freien Ende des Befestigungsansatzes 15 her auf diesen aufgeschoben, wodurch die Wandung der Lagerbohrung 17 satt an das Querstück 10 angedrückt wird, während das Querstück 10 selbst durch den es mit umschliessenden Spannring 19 unverlierbar in der Lagerbohrung 17 gehaltert ist.

Der Spannring 19 ist auf seiner der freien Stirnfläche 20 des Befestigungsansatzes 15 zugewandten Seite mit einer scharfen Innenrandkante ausgebildet, die sich bei dem unter Vorspannung erfolgenden Aufziehen des Spannringes auf dem Befestigungsansatz 15 etwas in das Kunsttoffmaterial eindrückt und deshalb ein unbeabsichtigtes Lösen des Spannringes 19 von dem Befestigungsansatz 15 ausschliesst. Zur Erleichterung des Aufsetzens des Spannringes 19 ist dieser auf der gegenüberliegenden Seite innen mit einer bei 21 angedeuteten Anfasung versehen.

Als ggf. zusätzliche Sicherung kann an dem Befestigungsansatz 15 noch eine Rasteinrichtung in Gestalt eines kleinen Bundes oder einer kleinen Einkerbung vorgesehen sein.

Für die Lagerteile 12 und auch die anderen Kunststoffteile 4, 5 ist ein Kunststoffmaterial verwendet, das eine gewisse Eigenelastizität aufweist, die das erwähnte Einschnappen des Querstückes 10 in die Lagerbohrung 17 gestattet. Die Längsstreben 3 und die Querstreben 4 sowie die Schenkel 6, 7 mit ihren Querstücken 10, 11 bestehen im übrigen vorzugsweise aus Aluminium.

Dadurch, dass die Befestigungsansätze 15 in der aus den Fig. 4 bis 6 ersichtlichen Weise zur Rahmeninnenseite hin weisend angeordnet sind, können die Schenkel der Schenkelpaare 6, 7 im wesentlichen in einer gemeinsamen Ebene mit den benachbarten Längsstreben 3 liegen. Auf jeden Fall ragen sie nicht seitlich über den Umriss der Lagerteile 12 vor. Dies ist sowohl aus ästhetischen wie auch aus Stabilitätsgründen von Bedeutung.

## Patentansprüche

1. Gepäckträger für Zweiradfahrzeuge, mit einem an dem Zweiradfahrzeug zu befestigenden, die Gepäckauflagefläche enthaltenden, aus Längs- (3) und Querstreben (4, 10) bestehenden Rahmen, an dem wenigstens ein zur Abstützung dienendes Schenkelpaar (6, 7) mittels Kunststofflagerteilen (12) angelenkt ist, die auf einander gegenüberliegenden Rahmenseiten, die Längsstreben umgreifend, an diese angespritzt sind und jeweils eine quer zu den Längsstreben verlaufende Lagerbohrung (17) aufweisen, in der die Schenkel mit einem zylindrischen Querstück (10, 11) gelagert sind, dadurch gekennzeichnet, dass jedes Lagerteil (12) jeweils einen zu der Lagerborhung (17) durchgehenden Einführschlitz (18) für das Querstück (10, 11) aufweist und die Lagerbohrung (17) sich durch einen an dem Lagerteil (12) angeformten, seitlich vorstehenden Befestigungsansatz (15) erstreckt, auf den ein das Querstück (10, 11) mit umschliessender und die Wandung der Lagerbohrung (17) an dem Querstück (10, 11) in Anlage haltender Spannring (19) unverlierbar aufgesetzt ist.

2. Gepäckträger nach Anspruch 1, dadurch gekennzeichnet, dass der Befestigungsansatz (15) eine zylindrische Aussenfläche (16) aufweist.

3. Gepäckträger nach einem der Ansprüche 1 oder 2, dadurch gekennzeichnet, dass der Befestigungsansatz (15) von der zugeordneten Längsstrebe (3) aus zur Rahmeninnenseite weisend angeordnet ist.

4. Gepäckträger nach Anspruch 3, dadurch gekennzeichnet, dass die Schenkel (6, 7) mit den Längsstreben (3) im wesentlichen in einer Ebene liegend an ihren Lagerteilen (12) angelenkt sind.

5. Gepäckträger nach einem der vorhergehenden Ansprüche, dadurch gekennzeichnet, dass der Spannring (19) auf seiner der freien Stirnfläche (20) des Befestigungsansatzes (15) zugewandten Seite mit einer scharfen Innenkante ausgebildet ist.

6. Gepäckträger nach Anspruch 5, dadurch gekennzeichnet, dass der Spannring (19) auf seiner der scharfen Innenkante gegenüberliegenden Seite innen mit einer randseitigen Anfasung (21) ausgebildet ist.

7. Gepäckträger nach einem der vorhergehenden Ansprüche, dadurch gekennzeichnet, dass der Befestigungsansatz (15) auf seiner Aussenfläche (16) eine mit dem Spannring (19) zusammenwirkende Rasteinrichtung trägt.

## Claims

1. Luggage carrier for two-wheel vehicles, comprising a frame to be attached to the two-wheel vehicle, said frame providing the luggage-bearing surface and being made up of longitudinal surface members (3) and transverse structural members (4, 10) and having, linked to it by means of plastic mounting structures (12), at least one pair of legs (6, 7) for support, said plastic mounting structures (12) being moulded, on opposite sides of the frame, to the longitudinal structures so as to encompass the same, and each having a mounting bore (17)—extending at right angles to the longitudinal structural members—in which the legs are supported with a cylindrical transverse member (10, 11), characterized in that each mounting structure (12) includes an insert slot (18), extending into the mounting bore (17), for the transverse member (10, 11), and in that the mounting bore (17) extends through a laterally projecting mounting attachment (15) moulded to the mounting structure (12), on which mounting attachment (15) a fixing ring (19) is undetachably mounted that also encompasses the transverse member (10, 11) and keeps the wall of the mounting bore (17) in close contact with the transverse member (10, 11).

2. Luggage carrier according to Claim 1, characterized in that the mounting attachment (15) has a cylindrical exterior surface (16).

3. Luggage carrier according to Claim 1, characterized in that the mounting attachment (15) is positioned so as to extend from the associated longitudinal structural member towards the interior of the frame.

4. Luggage carrier according to Claim 3, characterized in that the legs (6, 7) are linked at the mounting structures (12) with the longitudinal structural members (3) so as to lie essentially in one plane.

5. Luggage carrier according to one of the preceding claims, characterized in that the fixing ring (19) includes a sharp inner edge at the side disposed towards the free end face (20) of the mounting attachment (15).

6. Luggage carrier according to Claim 5, characterized in that, at the side opposite the sharp inner edge, the fixing ring (19) includes a chamfer (21) on the inside edge.

7. Luggage carrier according to one of the preceding claims, characterized in that the mounting attachment (15) has, on its exterior surface (16), a catch means that engages with the fixing ring (19).

## Revendications

1. Porte-bagages pour véhicule à deux roues, comportant un cadre à fixer sur le véhicule, cadre constitué d'entretoises longitudinales (3) et transversales (4, 10) formant la surface porteuse des bagages, et soutenu par au moins une paire de montants (6, 7) qui sont articulés sur le cadre au moyen de paliers (12) en matière plastique moulés par injection autour des entretoises longitudinales, en des points se faisant face de chaque côté du cadre, chaque palier étant muni d'un alésage (17) perpendiculaire aux entretoises longitudinales dans lequel est logé l'élément transversal cylindrique (10, 11) de la paire de montants correspondante, caractérisé en ce que chaque palier (12) est pourvu d'une fente (18) débouchant dans l'alésage (17) afin d'y introduire l'élément transversal (10, 11), et l'alésage (17) traverse un élément de fixation (15) moulé sur le support (12) de manière à former une saillie latérale, et sur lequel est enfilée de manière inamovible une bague de serrage (19) qui entoure l'élément transversal (10, 11) et maintient le pourtour de l'alésage (17) en application contre l'élément transversal (10, 11).

2. Porte-bagages selon la revendication 1, caractérisé en ce que l'élément de fixation (15) présente une face extérieure cylindrique (16).

3. Porte-bagages selon l'une des revendications 1 ou 2, caractérisé en ce que l'élément de fixation (15) est tourné depuis l'entretoise longitudinale (3) vers l'intérieur du cadre.

4. Porte-bagages selon la revendication 3, caractérisé en ce que les montants (6, 7) sont articulés sur les paliers (12) en étant situés pratiquement dans le même plan que les entretoises longitudinales (3).

5. Porte-bagages selon l'une des revendications précédentes, caractérisé en ce que la bague de serrage (19) présente, du côté tourné vers la face libre (20) de l'élément de fixation (15), une arête intérieure vive.

6. Porte-bagages selon la revendication 5, caractérisé en ce que le côté de la bague de serrage (19) opposé à son arête intérieure vive présente un bord intérieur chanfreiné (21).

7. Porte-bagages selon l'une des revendications précédentes, caractérisé en ce que l'élément de fixation (15) est muni, sur sa face extérieure (16), d'un dispositif d'encliquetage de la bague de serrage (19).

FIG.1

FIG.2

FIG.3

FIG.4

FIG.5

FIG.6